(19) **Europäisches Patentamt / European Patent Office / Office européen des brevets**

(11) **EP 4 318 162 B1**

(12) # EUROPEAN PATENT SPECIFICATION

(45) Date of publication and mention of the grant of the patent:
**02.07.2025 Bulletin 2025/27**

(21) Application number: **22938741.0**

(22) Date of filing: **23.05.2022**

(51) International Patent Classification (IPC):
**G05D 1/243** (2024.01)   **G05D 1/246** (2024.01)
**G05D 1/622** (2024.01)   **G05D 1/644** (2024.01)
**G05D 1/65** (2024.01)   **G05D 107/70** (2024.01)
**G05D 109/10** (2024.01)   **G05D 111/10** (2024.01)

(52) Cooperative Patent Classification (CPC):
**G05D 1/644; G05D 1/243; G05D 1/246;**
**G05D 1/622; G05D 1/65;** G05D 2107/70;
G05D 2109/10; G05D 2111/10

(86) International application number:
**PCT/CN2022/094525**

(87) International publication number:
**WO 2023/225812 (30.11.2023 Gazette 2023/48)**

(54) **MOBILE DEVICE AND SPEED CONTROL METHOD AND APPARATUS THEREFOR, AND STORAGE MEDIUM**

MOBILE VORRICHTUNG UND GESCHWINDIGKEITSSTEUERUNGSVERFAHREN UND -VORRICHTUNG DAFÜR SOWIE SPEICHERMEDIUM

DISPOSITIF MOBILE ET PROCÉDÉ ET APPAREIL DE COMMANDE DE VITESSE ASSOCIÉS, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.02.2024 Bulletin 2024/06**

(73) Proprietor: **Beijing Xiaomi Robot Technology Co., Ltd.**
**Beijing 100085 (CN)**

(72) Inventor: **LI, Dongfang**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
EP-B1- 0 778 507   EP-B1- 3 684 664
CN-A- 106 325 275   CN-A- 107 421 538
CN-A- 109 212 973   CN-A- 112 445 222
JP-A- 2016 024 766

- FOX D ET AL: "THE DYNAMIC WINDOW APPROACH TO COLLISION AVOIDANCE", IEEE ROBOTICS & AUTOMATION MAGAZINE, IEEE SERVICE CENTER, PISCATAWAY, NJ, US, vol. 4, no. 1, 1 March 1997 (1997-03-01), pages 23 - 33, XP000688538, ISSN: 1070-9932, DOI: 10.1109/100.580977

## Description

### TECHNICAL FIELD

The present disclosure relates to the technical field of intelligent robots, and in particular to specifically to a mobile device, a speed control method and apparatus thereof, and a storage medium.

### BACKGROUND

At present, autonomous mobile devices are widely used in various industrial and life scenes, such as logistics robots, food delivery robots, and sweeping robots. The motion control planning of mobile devices directly determines the operation effect and safety level of the mobile devices. In related technologies, the moving speed control effect of mobile devices is poor, resulting in lower safety and moving efficiency of the mobile devices.

EP3684664B1 discloses a method for navigation of a robot along a goal path and avoiding obstacles. The method includes receiving goal pose for one or more robots and determining a goal path for a first robot while avoiding moving and fixed obstacles of a received obstacle map. A first objective function is evaluated to select a preferred velocity from a generated set of candidate velocities, the selecting based on one or more weighted cost functions. A set of velocity obstacles created based on the poses of the one or more robots and the preferred velocity is used in evaluating a second objective function to determine the motion of the robot in the next time cycle. Creating the set of velocity objects includes converting the preferred velocity from a non-holonomic to a holonomic velocity.

FOX D ET AL: "THE DYNAMIC WINDOW APPROACH TO COLLISION AVOIDANCE", IEEE ROBOTICS & AUTOMATION MAGAZINE, IEEE SERVICE CENTER, PISCATAWAY, NJ, US, vol. 4, no. 1, 1 March 1997 (1997-03-01), pages 23-33, XP000688538, focuses on one particular aspect of the design of such a robot: the reactive avoidance of collisions with obstacles. The dynamic window approach proposed in this paper is especially designed to deal with the constraints imposed by limited velocities and accelerations, because it is derived directly from the motion dynamics of synchro-drive mobile robots. In a nutshell, this paper considers periodically only a short time interval when computing the next steering command to avoid the enormous complexity of the general motion planning problem. The approximation of trajectories during such a time interval by circular curvatures results in a two-dimensional search space of translational and rotational velocities. This search space is reduced to the admissible velocities allowing the robot to stop safely. Due to the limited accelerations of the motors a further restriction is imposed on the velocities: the robot only considers velocities that can be reached within the next time interval. These velocities form the dynamic window which is centered around the current velocities of the robot in the velocity space. Among the admissible velocities within the dynamic window the combination of translational and rotational velocity is chosen by maximizing an objective function. The objective function includes a measure of progress towards a goal location, the forward velocity of the robot, and the distance to the next obstacle on the trajectory. By combining these, the robot trades off its desire to move fast towards the goal and its desire to ship around obstacles (which decrease the free space). The combination of all objectives leads to a very robust and elegant collision avoidance strategy.

EP0778507B1 involves detecting objects (2, 3) in front of the vehicle using a distance sensor in the vehicle (1). The distance between the vehicle (1) and the detected object (2, 3) is determined and is fed to a regulating device. This forms at least one control parameter to adjust the drive speed. A fixative radius of curvature (R) of the path being driven is determined in the regulating device using the distance (a) between the detected object (2, 3) and the vehicle (1). In dependence on the radius of curvature (R), a speed target value is calculated to determine the control parameter for the vehicle drive speed. The radius of curvature may be calculated from the measured distance between the object and the vehicle and a distance of the vehicle from the edge of the street.

### SUMMARY

To improve the speed control effect of a mobile device, embodiments of the present disclosure provide a mobile device, a speed control method and apparatus thereof, and a storage medium.

In a first aspect, an embodiment of the present disclosure provides a speed control method applied to a mobile device, and the method includes:

obtaining a cost map of a moving area and a target path of the mobile device moving in the moving area;
based on the cost map, determining a current target distance between the mobile device and an obstacle, and a current turning curvature of the mobile device when moving along the target path;
determining a target speed of the mobile device based on the current target distance, the current turning curvature, and a maximum limiting speed of the mobile device; and
controlling the mobile device to move at the target speed.

In some embodiments, obtaining the cost map of the moving area and the target path of the mobile device moving in the moving area includes:

obtaining scene data of the moving area collected through one or more sensors of the mobile device;
performing localization on the mobile device and mapping based on the scene data to obtain a current position of the mobile device and an environment map; and
obtaining the cost map of the moving area based on obstacle information in the environment map, and determining the target path of the mobile device based on the cost map and the current position.

In some embodiments, based on the cost map, determining the current target distance between the mobile device and the obstacle includes:

based on the cost map, determining obstacle data within a preset range in front of the mobile device;
based on the obstacle data, determining a first distance between the obstacle and the target path, and a second distance between the obstacle and a current position of the mobile device; where the first distance is perpendicular to the target path, and the second distance is parallel to the target path; and
obtaining the current target distance based on the first distance and the second distance.

In some embodiments, based on the cost map, determining the current turning curvature of the mobile device when moving along the target path includes:

based on the cost map, determining a first reference line segment and a second reference line segment within a preset range in front of the mobile device; where the first reference line segment and the second reference line segment are both perpendicular to the target path, and a preset distance is spaced between the first reference line segment and the second reference line segment; and
determining the current turning curvature of the mobile device based on an angle between the first reference line segment and the second reference line segment.

In some embodiments, determining the current turning curvature of the mobile device based on the angle between the first reference line segment and the second reference line segment includes:

in response to the first reference line segment intersecting with the second reference line segment, determining intersection coordinates of the first reference line segment and the second reference line segment based on the cost map, determining the angle between the first reference line segment and the second reference line segment based on the intersection coordinates and the preset distance, and determining the angle as the current turning curvature; or
in response to the first reference line segment not intersecting with the second reference line segment, determining that the current turning curvature is zero.

In some embodiments, determining the target speed of the mobile device based on the current target distance, the current turning curvature, and the maximum limiting speed of the mobile device includes:

determining a straight-line travelling speed component of the mobile device based on the current target distance and the maximum limiting speed; where the straight-line travelling speed component is positively correlated with the current target distance;
determining a turning speed component of the mobile device based on the current turning curvature and the maximum limiting speed; where the turning speed component is negatively correlated with the current turning curvature; and
based on a preset straight-line travelling speed weight and a preset turning speed weight, performing a weighted fusion processing on the straight-line travelling speed component and the turning speed component to obtain the target speed of the mobile device.

In some embodiments, the current target distance includes a first distance perpendicular to the target path and a second distance parallel to the target path, and determining the straight-line travelling speed component of the mobile device based on the current target distance and the maximum limiting speed includes:

determining a first speed component of the mobile device based on the first distance and the maximum limiting speed;
determining a second speed component of the mobile device based on the second distance and the maximum limiting speed; and
obtaining the straight-line travelling speed component based on the first speed component and the second speed component.

In some embodiments, controlling the mobile device to move at the target speed includes:
controlling the mobile device to move at the target speed in response to the target speed satisfying a preset speed range.

In a second aspect, an embodiment of the present disclosure provides a speed control apparatus applied to a mobile device, and the apparatus includes:

an obtaining module, configured to obtain a cost map of a moving area and a target path of the mobile device moving in the moving area;

a first determining module, configured to determine, based on the cost map, a current target distance between the mobile device and an obstacle, and a current turning curvature of the mobile device when moving along the target path;

a second determining module, configured to determine a target speed of the mobile device based on the current target distance, the current turning curvature, and a maximum limiting speed of the mobile device; and

a controlling module, configured to control the mobile device to move at the target speed.

In some embodiments, the obtaining module is configured to:

obtain scene data of the moving area collected through one or more sensors of the mobile device;

perform localization on the mobile device and mapping based on the scene data to obtain a current position of the mobile device and an environment map; and

obtain the cost map of the moving area based on obstacle information in the environment map, and determine the target path of the mobile device based on the cost map and the current position.

In some embodiments, the first determining module is configured to:

based on the cost map, determine obstacle data within a preset range in front of the mobile device;

based on the obstacle data, determine a first distance between the obstacle and the target path, and a second distance between the obstacle and a current position of the mobile device; where the first distance is perpendicular to the target path, and the second distance is parallel to the target path; and

obtain the current target distance based on the first distance and the second distance.

In some embodiments, the first determining module is configured to:

based on the cost map, determine a first reference line segment and a second reference line segment within a preset range in front of the mobile device; where the first reference line segment and the second reference line segment are both perpendicular to the target path, and a preset distance is spaced between the first reference line segment and the second reference line segment; and

determine the current turning curvature of the mobile device based on an angle between the first reference line segment and the second reference line segment.

In some embodiments, the first determining module is configured to:

in response to the first reference line segment intersecting with the second reference line segment, determine intersection coordinates of the first reference line segment and the second reference line segment based on the cost map, determine the angle between the first reference line segment and the second reference line segment based on the intersection coordinates and the preset distance, and determine the angle as the current turning curvature; or

in response to the first reference line segment not intersecting with the second reference line segment, determine that the current turning curvature is zero.

In some embodiments, the second determining module is configured to:

determine a straight-line travelling speed component of the mobile device based on the current target distance and the maximum limiting speed; where the straight-line travelling speed component is positively correlated with the current target distance;

determine a turning speed component of the mobile device based on the current turning curvature and the maximum limiting speed; where the turning speed component is negatively correlated with the current turning curvature; and

based on a preset straight-line travelling speed weight and a preset turning speed weight, perform a weighted fusion processing on the straight-line travelling speed component and the turning speed component to obtain the target speed of the mobile device.

In some embodiments, the second determining module is configured to:

determine a first speed component of the mobile device based on the first distance and the maximum limiting speed;
determine a second speed component of the mobile device based on the second distance and the maximum limiting speed; and
obtain the straight-line travelling speed component based on the first speed component and the second speed component.

In some embodiments, the controlling module is configured to:
control the mobile device to move at the target speed in response to the target speed satisfying a preset speed range.
In a third aspect, an embodiment of the present disclosure provides a mobile device, including:

a processor; and
a memory storing computer instructions for causing the processor to perform the method according to any embodiment in the first aspect.

In a fourth aspect, an embodiment of the present disclosure provides a storage medium, which stores computer instructions for causing a computer to perform the method according to any embodiment in the first aspect.
The speed control method according to the embodiment of the present disclosure includes: obtaining the cost map of the moving area and the target path of the mobile device moving in the moving area; based on the cost map, determining the current target distance between the mobile device and the obstacle, and the current turning curvature; determining the target speed based on the current target distance, the current turning curvature, and the maximum limiting speed; and controlling the mobile device to move at the target speed. In the embodiment of the present disclosure, the current moving speed is controlled by the current target distance between the mobile device and the obstacle, and the current turning curvature, so that the moving speed can be adaptively adjusted according to the current road condition, and the risk of an accident can be reduced. Moreover, in speed control, not only the target distance between the mobile device and the obstacle, but also the bending degree of the target path of the mobile device itself is considered, so as to avoid overturning caused by too fast turning speed, reduce the risk of an accident caused by a blind area of vision at turns, and further improve the speed control effect.

## BRIEF DESCRIPTION OF THE DRAWINGS

In order to explain the technical solutions more clearly in specific embodiments of the present disclosure or the prior art, accompanying drawings required for the description of the specific embodiments or the prior art will be briefly introduced below. It is obvious that the drawings in the following description are some embodiments of the present disclosure. For those of ordinary skill in the art, other drawings can also be obtained based on these drawings, without paying any creative labor.

FIG. 1 is a structural block diagram of a mobile device according to some embodiments of the present disclosure.
FIG. 2 is a flowchart of a speed control method according to some embodiments of the present disclosure.
FIG. 3 is a flowchart of a speed control method according to some embodiments of the present disclosure.
FIG. 4 is a schematic diagram of a speed control method according to some embodiments of the present disclosure.
FIG. 5 is a flowchart of a speed control method according to some embodiments of the present disclosure.
FIG. 6 is a flowchart of a speed control method according to some embodiments of the present disclosure.
FIG. 7 is a schematic diagram of a speed control method according to some embodiments of the present disclosure.
FIG. 8 is a flowchart of a speed control method according to some embodiments of the present disclosure.
FIG. 9 is a flowchart of a speed control method according to some embodiments of the present disclosure.
FIG. 10 is a structural block diagram of a speed control apparatus according to some embodiments of the present disclosure.

## DETAILED DESCRIPTION OF THE EMBODIMENTS

The technical solutions in the embodiments of the present disclosure will be described clearly and completely below in combination with the accompanying drawings. Obviously, the described embodiments are only part of the embodiments of the present disclosure, not all of them. Based on the embodiments in the disclosure, all other embodiments obtained by those of ordinary skill in the art without doing creative work belong to the protection scope of the present disclosure. In addition, technical features involved in different embodiments of the present disclosure described below can be combined with each other as long as they do not conflict with each other.

At present, mobile devices such as sweeping robots, logistics robots, food delivery robots, and foot robots can move autonomously in preset operation spaces to achieve corresponding operation requirements. The speed control of mobile devices is an important part of motion planning. If the mobile devices move too fast, the risk of an accident and losses caused by the accident will increase. If the mobile devices move too slowly, their operation efficiency will also decreases.

In related technologies, in some scenes, a working area of a mobile device can be divided in advance to perform speed limiting. For example, the whole moving area of the mobile device can be divided into three zones A, B and C in advance. Different maximum limiting speeds are set in advance for each zone according to obstacles, mobile device density and other factors, so that when the mobile device runs to a certain zone, the mobile device will operate according to a maximum limiting speed specified for the zone.

In this scenario, the mobile device cannot adaptively adjust the moving speed based on changes of obstacles, and can only operate according to the speed limited for the zone. When the density of obstacles or devices in a certain zone with a low limiting speed decreases, the mobile device still operates according to the low limiting speed, resulting in a decrease in the operation efficiency of the mobile device. On the contrary, when the density of obstacles or devices in a certain zone with a high limiting speed increases, the mobile device still operates according to the high limiting speed, resulting in a significant increase in the risk of collision, scratch, and other accidents on the mobile device. In addition, the mobile device can only achieve the control of the moving speed in the set zones, and cannot achieve speed adaptive control for other moving areas, so the adaptability of the mobile device is very poor.

Based on the defects in the aforementioned related technologies, the present disclosure provides a mobile device, a speed control method and apparatus thereof, and a storage medium, aiming at achieving speed adaptive control of the mobile device, reducing the risk of an accident of the mobile device, and improving the safety and moving efficiency of the mobile device.

In a first aspect, an embodiment of the present disclosure provides a speed control method, which can be applied to a mobile device. The mobile device in the embodiment of the present disclosure can be any type of device with autonomous motion capability suitable for implementation, such as a foot robot, a sweeping robot, a logistics robot, a food delivery robot, an intelligent mobile trash can, which in not limited in the present disclosure.

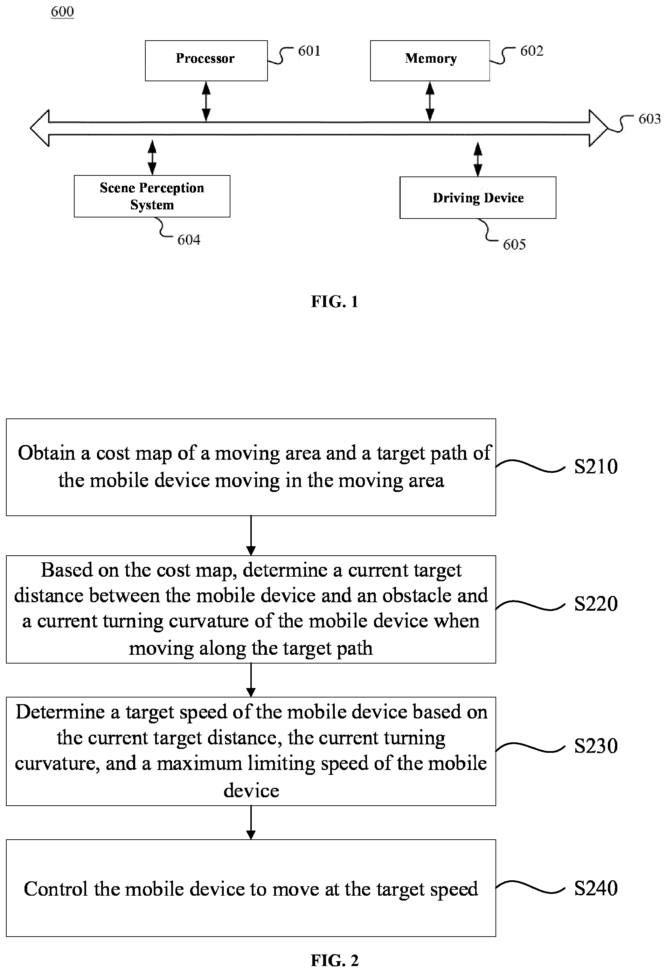

As shown in FIG. 1, in some embodiments, a mobile device 600, as an example in the present disclosure, includes a processor 601, a memory 602, a scene perception system 604, and a driving device 605.

The processor 601, the memory 602, the scene perception system 604, and the driving device 605 establish a communicable connection between any two of them through a bus 603.

The processor 601 can be any type of processor with one or more processing cores. The processor 601 can perform single-threaded or multi-threaded operations for parsing instructions to perform operations such as obtaining data, performing logical operation functions, and issuing operation processing results.

The memory 602 may include a non-volatile computer readable storage medium, such as at least one disk storage device, flash memory device, distributed storage device remotely set relative to the processor 601, or other non-volatile solid-state storage device. The memory can have a program storage area for storing non-volatile software programs, non-volatile computer executable programs and modules, which can be called by the processor 601 to cause the processor 601 to perform one or more method steps. The memory 602 may also include a volatile random storage medium, or a storage portion such as a hard disk, as a data storage area for storing operation processing results and data output by the processor 601.

The scene perception system 604 is a sensor system used by the mobile device to obtain data of a current scene. Relevant data of the current scene is collected by the scene perception system 604, so that the mobile device can realize device localization, map construction, and other functions.

In some implementations, the scene perception system 604 may be a simultaneous localization and mapping (SLAM) system. The SLAM system can include a plurality of sensors, such as a monocular camera, a binocular camera, a lidar, an inertial measurement unit (IMU) sensor, a time of flight (ToF) sensor. Through these sensors, the data of the mobile device in the process of movement are collected in real time, and based on the collected data, the device localization and mapping are realized by SLAM algorithm.

In the embodiment of the present disclosure, a cost map during the movement of the mobile device can be established through the data collected by the scene perception system 604, so as to realize path planning and speed control of the mobile device, which will be described in detail in the following methods of the present disclosure, and will not be elaborated herein.

The driving device 605 is a power system of the mobile device, which is used to drive the mobile device 600 to generate displacement. In some embodiments, the driving device 605 may include mechanical structures such as motors, transmission mechanisms, and rollers, which can be undoubtedly understood and fully implemented by those skilled in the art, and will not be described in detail in the present disclosure. Those skilled in the art can understand that mobile device 600 can also include various other electrical components and mechanical components, which will not be described in detail in the present disclosure.

On the basis of the mobile device shown in FIG. 1, an embodiment of the present disclosure provides a speed control method for real-time control of the speed of the mobile device 600 during movement. This method can be performed by the processor 601 of the mobile device 600, and will be described below in combination with the embodiment in FIG. 2.

As shown in FIG. 2, in some embodiments, the speed control method in an example of the present disclosure includes steps S210 to S240.

In S210, a cost map of a moving area and a target path of the mobile device moving in the moving area are obtained.

It can be understood that the cost map is a virtual map calculated based on an environment map and data collected by sensors of the mobile device, indicating the cost that the mobile device will consume when moving in a specific way. The path planning problem for the mobile device is defined as finding a path with the least cost on the cost map.

The moving area refers to an area with a preset range that allows the mobile device to move autonomously. For example, a sweeping robot is taken as an example of the mobile device, the moving area is a working area of the sweeping robot.

In the embodiment of the present disclosure, scene data of the mobile device during movement can be collected in real time based on the scene perception system 604 of the mobile device. The scene data can include image data in front of the mobile device, lidar data, position-orientation data of the motion of the mobile device itself, speed data, etc. Based on the collected scene data, a cost map of the area in front of the mobile device during movement and a target path of the mobile device in a next period of time can be obtained.

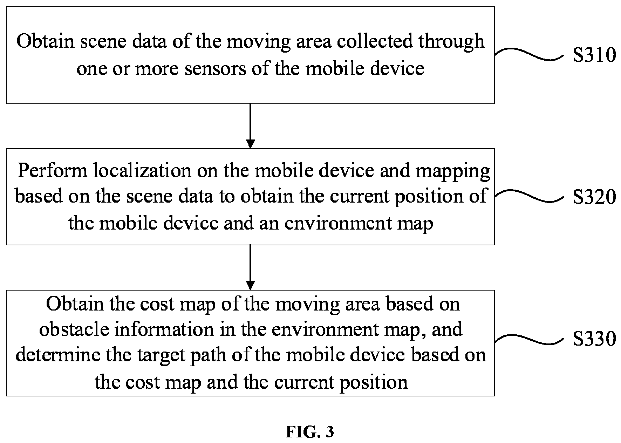

The process of calculating the cost map and the target path of the mobile device will be explained in the embodiment shown in FIG. 3 below, and will not be expanded herein.

In S220, based on the cost map, a current target distance between the mobile device and an obstacle and a current turning curvature of the mobile device when moving along the target path are determined.

In the embodiment of the present disclosure, the current target distance refers to a distance between a current position of the mobile device and the front obstacle, and the current turning curvature refers to a turning curvature of the mobile device when moving along the target path currently.

In traditional robot path planning solution, generally, only the distance between the mobile device and the front obstacle is concerned. When the distance between the mobile device and the obstacle is relatively close, in order to reduce the risk of collision or scratch between the mobile device and the obstacle, the moving speed of the robot is reduced.

However, the inventor of the present disclosure found that whether a mobile device will have an accident depends on two aspects. On the one hand, it depends on the distance between the mobile device and the obstacle, and the closer the distance between the two, the higher the risk of an accident. On the other hand, it also depends on a turning angle of the mobile device. During the turning process, the mobile device often encounters collisions and scratches due to a blind area of vision. The larger the turning angle of the mobile device, the greater the risk of an accident.

In the embodiment of the present disclosure, based on the cost map, it is not only necessary to determine the target distance between the current position of the mobile device and the front obstacle, but also to determine the turning curvature of the mobile device when moving along the target path currently. The turning curvature can reflect the magnitude of the turning angle. When the target path is a straight line and the mobile device is currently moving along the straight line, the corresponding turning curvature is zero.

In some embodiments, it can be determined whether there are is an obstacle within a preset range in front of the current position of the mobile device based on the cost map, and the preset range represents a preset forward-looking range of the robot. If there is an obstacle within the preset range, the distance between the obstacle and the current position of the mobile device can be determined based on the cost map, i.e., the current target distance as described in the embodiment of the present disclosure.

In some embodiments, the current target distance between the mobile device and the obstacle includes two mutually perpendicular components, namely a first distance and a second distance.

The first distance refers to a distance component of the obstacle perpendicular to the target path. Due to a certain volume width of the mobile device itself, when the mobile device moves along the target path, if the distance component of the front obstacle perpendicular to the target path is small, the risk of collision or scratch between the mobile device and the obstacle is high.

The second distance refers to a distance component of the obstacle in a direction parallel to the target path. When the mobile device moves along the target path, if the distance component of the front obstacle parallel to the target path is small, it indicates that the current position of the mobile device is close to the obstacle, and the risk of collision or scratch is high.

In the following embodiments of the present disclosure, the specific principles and processes of the first distance and the second distance will be explained, and will not be elaborated herein.

In addition, it can be understood that, in the embodiment of the present disclosure, a line connecting between the current position of the mobile device and the position of the obstacle can also be directly used as the current target distance, that is, it is not necessary to calculate the first and second distance components mentioned above, which is not limited in the present disclosure.

In some embodiments, based on the cost map, within a preset range in front of the mobile device, two normal line segments spaced by a preset distance made for the target path can be used as reference line segments, namely a first reference line segment and a second reference line segment.

It can be understood that, since the first reference line segment and the second reference line segment are always perpendicular to the target path, when the target path is a straight line, the first reference line segment and the second reference line segment are in a parallel positional relationship and will not intersect.

When the target path is a curve, the first reference line segment and the second reference line segment are no longer parallel to each other, and as the curvature of the target path increases, the first reference line segment and the second reference line segment will intersect and form an angle. The larger the curvature of the target path, the greater the value of the angle. Thus, the turning curvature of the mobile device when moving along the target path currently can be determined by the value of the angle.

The specific process and principle of determining the turning curvature will be explained in detail in the following embodiments of the present disclosure, and will not be elaborated herein.

In addition, it can be understood that the turning curvature indicates the degree of turning that the mobile device is currently moving along the target path. In the embodiment of the present disclosure, it is not limited to using the above manner to determine the turning curvature, and any other manner suitable for implementation can be used, as long as the turning curvature parameter representing a bending degree of the target path can be obtained. For example, based on the cost map, the curvature of the target path within a preset range in front of the mobile device can be directly calculated to obtain the turning curvature of the target path, which is not limited in the present disclosure.

In S230, a target speed of the mobile device is determined based on the current target distance, the current turning curvature, and a maximum limiting speed of the mobile device.

The maximum limiting speed $V_{max}$ of the mobile device represents a maximum operating speed allowed for the mobile device. The speed control task of the mobile device can be understood as a process of adjusting the maximum limiting speed of the mobile device. By adaptively adjusting the maximum limiting speed of the mobile device, the mobile device can maintain an appropriate moving speed under different road conditions.

In the embodiment of the present disclosure, after obtaining the target distance between the current position of the mobile device and the front obstacle, and the turning curvature of the mobile device when moving along the target path currently, the maximum limiting speed $V_{max}$ of the mobile device can be comprehensively adjusted based on the target distance and the turning curvature to obtain the corresponding target speed.

It can be understood that the target distance reflects the proximity between the mobile device and the obstacle. The smaller the target distance, the higher the risk of an accident for the mobile device, and thus the lower the target speed should be. The turning curvature reflects a bending degree of the movement path of the mobile device itself. The greater the turning curvature, the higher the risk of an accident for the mobile device, and thus the lower the target speed should be.

Based on the above principles, the maximum limiting speed of the mobile device can be comprehensively adjusted based on the current target distance and the current turning curvature to obtain the target speed of the mobile device for movement.

For example, in some embodiments, a straight-line travelling speed component of the mobile device can be determined based on the current target distance and the maximum limiting speed, and a turning speed component of the mobile device can be determined based on the current turning curvature and the maximum limiting speed. Then, the straight-line travelling speed component and the turning speed component are weighted and summed to obtain the final target speed. This will be explained in the following implementations of the present disclosure and will not be elaborated herein.

In S240, the mobile device is controlled to move at the target speed.

In the embodiment of the present disclosure, after determining the target speed of the mobile device, the mobile device can be controlled to move at that target speed. For example, as shown in FIG. 1, the processor 601 can generate corresponding control instructions based on the target speed and send the control instructions to the driving device 605. The driving device 605 outputs a motor torque according to the control instructions, thereby controlling the mobile device to move at the target speed.

The speed control process of the mobile device for one control cycle is illustrated as an example. The above method process can be repeated for each control cycle, and the speed control of the mobile device in the process of autonomous movement can be realized. For example, in an example, the control frequency of the mobile device is 5Hz, that is, the above method process is performed once every 200ms to achieve the speed control of the mobile device.

From the above description, it can be seen that in the embodiment of the present disclosure, the current moving speed is controlled by the current target distance between the mobile device and the obstacle, and the current turning curvature, so that the moving speed can be adjusted adaptively according to the current road condition, and the risk of an accident can be reduced. Moreover, in speed control, not only the target distance between the mobile device and the obstacle, but also the bending degree of the target path of the mobile device itself are considered, and thus the risk of an accident caused by a blind area of vision at turns can be reduced, and speed control effect can be further improved.

As shown in FIG. 3, in the speed control method in an example of the present disclosure, obtaining the cost map of the moving area and the target path includes steps S310 to S330.

In S310, scene data of the moving area collected through one or more sensors of the mobile device is obtained.

In the embodiment of the present disclosure, as shown in FIG. 1, during the movement of the mobile device 600, the scene perception system 604 can collect the scene data in a current state.

For example, in an example, the scene perception system 604 is a VSLAM system based on computer vision. The scene data collected by the VSLAM system can include scene image data of the moving area in front of the mobile device, physical depth data, and motion information of the mobile device itself.

In other examples, the scene perception system 604 can also be other systems, such as lidar, which is not limited in the present disclosure.

In S320, localization on the mobile device and mapping are performed based on the scene data to obtain the current position of the mobile device and an environment map.

In the embodiment of the present disclosure, based on the scene data collected by the scene perception system 604, according to the scene data, including, for example, image data, physical depth data, lidar data, IMU data, etc., an simultaneous localization and mapping (SLAM) algorithm can be used to locate the mobile device and reconstruct an map of the moving area in front of the mobile device, so as to obtain the current position of the mobile device and the environment map of the moving area.

The principle and process of the SLAM algorithm can be undoubtedly understood and fully implemented by those skilled in the art by referring to relevant technologies, and is not limited in the present disclosure.

In S330, the cost map of the moving area is obtained based on obstacle information in the environment map, and the target path of the mobile device is determined based on the cost map and the current position.

Based on the above, the cost map is a virtual map used for path planning of the mobile device. In some implementations, the cost map can be a local 2D cost map within a preset range in front of the mobile device.

In an embodiment of the present disclosure, after obtaining the environment map, the obstacle information in the environment map can be determined by combining data such as lidar data or physical depth data, and then the corresponding cost map can be obtained based on the obstacle information and the environment map.

However, after obtaining the cost map, the target path of the mobile device within the cost map can be determined based on the current position of the mobile device and a preset global path of the mobile device. The target path is a planned moving path of the mobile device in a next period of time.

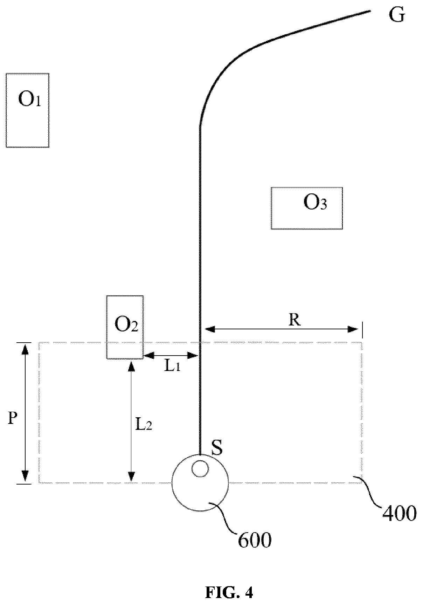

For example, in an example, the cost map can be shown in FIG. 4, the current position of mobile device 600 is S, a target position is G, and a curve SG is a target path. There are three obstacles in the moving area, namely obstacle $O_1$, obstacle $O_2$, and obstacle $O_3$.

In the following embodiments of the present disclosure, the speed control method in the present disclosure will be explained using the cost map shown in FIG. 4. However, it can be understood that FIG. 4 is only an example of the embodiments in the present disclosure and does not limit the present disclosure.

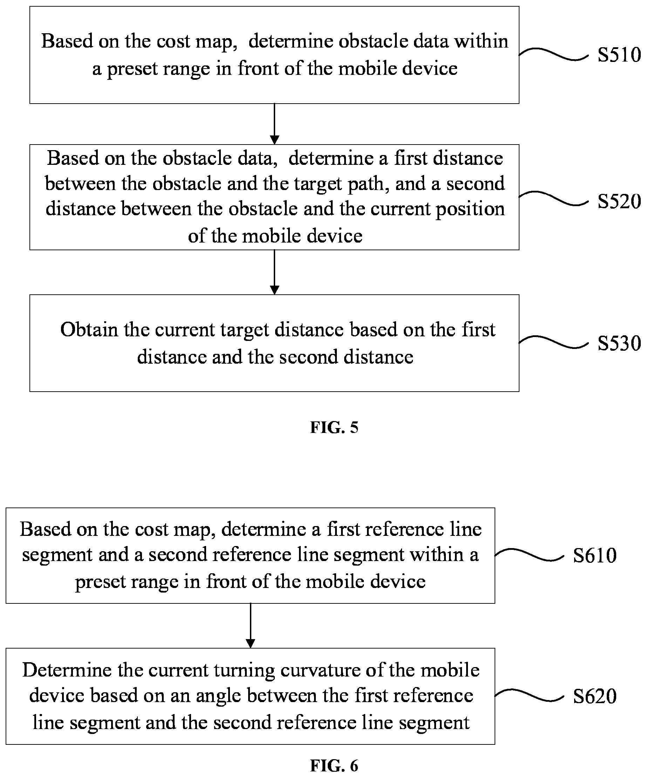

As shown in FIG. 5, in the speed control method in an example of the present disclosure, determining the current target distance between the mobile device and the obstacle includes steps S510 to S530.

In S510, based on the cost map, obstacle data within a preset range in front of the mobile device is determined.

In S520, based on the obstacle data, a first distance between the obstacle and the target path, and a second distance between the obstacle and the current position of the mobile device are determined.

In S530, the current target distance based on the first distance and the second distance is obtained.

In the embodiment of the present disclosure, the preset range in front of the mobile device refers to an area with a preset forward-looking range in front of the moving direction of the mobile device.

It can be understood that in the movement process of the mobile device, it is necessary to determine information on the road condition in front of the mobile device in advance, so as to control the speed of the mobile device. That is, the speed control and path planning of the mobile device should be forward-looking. The preset range described in the present disclosure refers to an area with a preset forward-looking range of the mobile device.

For example, in the example in FIG. 4, a preset range 400 in front of the mobile device 600 is an area with a rectangular range shown by the dashed line in the figure. As the mobile device 600 moves, the preset range 400 is always located in front of the moving direction of the mobile device 600. In an example the present disclosure, the size of the preset range is 2R*P, where specific values of R and P can be set according to factors such as the size of the mobile device and requirements of the scene, which is not limited in the present disclosure.

Those skilled in the art can understand that the preset range 400 in FIG. 4 is only an example of the embodiment of the present disclosure. The preset range 400 is not limited to the area with the rectangular range shown in FIG. 4, but can also be, for example, an area with a sector range, etc., which is not limited in the present disclosure.

In the embodiment of the present disclosure, after obtaining the cost map of the moving area, it can be determined whether there is an obstacle within a preset range in front of the current position of the mobile device based on the cost map. If there is an obstacle within the preset range, the obstacle data can be determined based on the cost map. The obstacle data includes position coordinates of the obstacle in an image coordinate system.

In the embodiment of the present disclosure, the current target distance between the mobile device and the obstacle includes two mutually perpendicular components, namely a first distance and a second distance. The first distance refers to a distance that the obstacle is perpendicular to the target path, and the second distance refers to a distance between the obstacle and the mobile device in a direction parallel to the target path.

For example, in the example of FIG. 4, an obstacle $O_2$ is located within the preset range 400, so based on obstacle data, a first distance $L_1$ between the obstacle and the target path, and a second distance $L_2$ between the obstacle and the mobile device, can be determined on the cost map.

In this example, the first distance refers to the shortest distance $L_1$ obtained by making the obstacle $O_2$ perpendicular to the target path SG. The second distance refers to the shortest distance $L_2$ between the obstacle $O_2$ and the mobile device 600 in the direction parallel to the target path. That is, the first distance $L_1$ and the second distance $L_2$ are perpendicular to each other.

In the embodiment of the present disclosure, the current target distance between the mobile device and the obstacle includes the first distance $L_1$ and the second distance $L_2$ mentioned above. Therefore, after obtaining the first distance $L_1$ and the second distance $L_2$, the first distance $L_1$ and the second distance $L_2$ are determined as the current target distance between the mobile device and the obstacle.

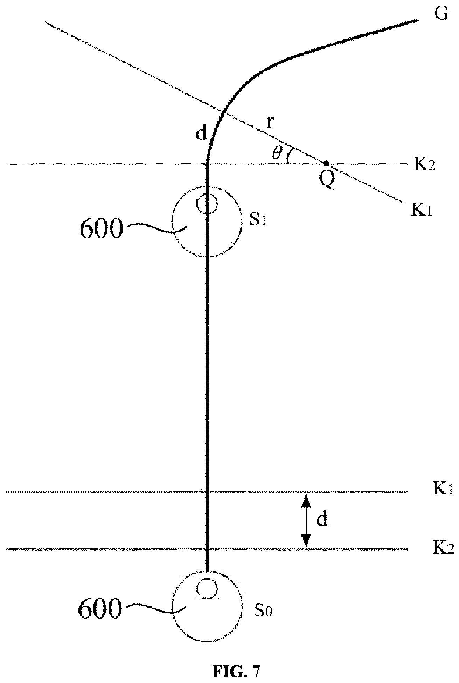

The process of determining the current target distance between the mobile device and the obstacle in the method of the present disclosure is explained above with reference to the embodiment in FIG. 5. The process of determining the current turning curvature in the method of the present disclosure will be described below with reference to FIGs. 6 and 7.

As shown in FIG. 6, in the speed control method in an example of the present disclosure, determining the current turning curvature of the mobile device when moving along the target path includes steps S610 and S620.

In S610, based on the cost map, a first reference line segment and a second reference line segment within a preset range in front of the mobile device are determined.

In S620, the current turning curvature of the mobile device is determined based on an angle between the first reference line segment and the second reference line segment.

In the embodiment of the present disclosure, based on the cost map, within a preset range in front of the mobile device, two normal line segments spaced by a preset distance made for the target path can be used as reference line segments, respectively defined as the first reference line segment and the second reference line segment. Referring to the cost map shown in FIG. 7, the obstacles $O_1$ to $O_3$ in the cost map are hidden for sake of clarity.

As shown in FIG. 7, within the preset range 400 in front of mobile device 600, two normal segments are made for the target path, namely a first reference line segment $K_1$ and a second reference line segment $K_2$. The first reference line segment $K_1$ and the second reference line segment $K_2$ are spaced by a preset distance d. It can be understood that the length of the first reference line segment $K_1$ and the second reference line segment $K_2$ can be set according to specific scene requirements, which is not limited in the present disclosure.

Continuing to refer to FIG. 7, it is assumed that when the current position of the mobile device 600 is S0, the target path is a straight line. Since the first reference line segment $K_1$ and the second reference line segment $K_2$ are both perpendicular to the target path, the first reference line segment $K_1$ and the second reference line segment $K_2$ are parallel to each other, and they will not intersect, and there will be no angle.

It is assumed that when the current position of mobile device 600 is S1, the target path ahead is a curve. Since the first reference line segment $K_1$ and the second reference line segment $K_2$ are always perpendicular to the target path, the first reference line segment $K_1$ and the second reference line segment $K_2$ will intersect, with an intersection point of Q and an angle $\theta$ between the two.

In addition, it is noted that since both the first reference line segment $K_1$ and the second reference line segment $K_2$ are line segments, that is, they are not infinitely extended, even if the first reference line segment $K_1$ and the second reference line segment $K_2$ are no longer parallel due to the bending of the target path, the first reference line segment $K_1$ and the second reference line segment $K_2$ will not intersect when the curvature is very small. By changing the preset distance d between the first reference line segment $K_1$ and the second reference line segment $K_2$, and the length of the line segments, a curvature boundary of the target path when ends of the first reference line segment $K_1$ and the second reference line segment $K_2$ intersect can be adjusted, which can be understood and fully implemented by those skilled in the art, and will not be further elaborated in the present disclosure.

Based on FIG. 7, it can be seen that in the embodiment of the present disclosure, when the first reference line segment and the second reference line segment do not intersect, it indicates that the target path within the preset range is a straight line or has a small curvature. At this time, there is no angle between the first reference line segment and the second reference line segment, and the current turning curvature of the target path is defined as zero.

When the first reference line segment intersects with the second reference line segment, based on the coordinate data of the cost map, position coordinates of an intersection point Q of the first reference line segment $K_1$ and the second reference line segment $K_2$ can be determined. After obtaining the position coordinates of the intersection point Q, a distance r from the intersection point Q to the target path can be determined, and an arc d is a known preset distance. Therefore, the value of the angle $\theta$ between the first reference line segment $K_1$ and the second reference line segment $K_2$ can be determined using a sector formula, which is represented as $\theta = d/r$. In the embodiment of the present disclosure, the value of the angle $\theta$ can be determined as the current turning curvature of the mobile device.

Based on the above process, the target distance between the current position of the mobile device and the obstacle, and the turning curvature can be determined, and then the maximum limiting speed of the mobile device can be adjusted based on the target distance and the turning curvature, which will be described in detail below.

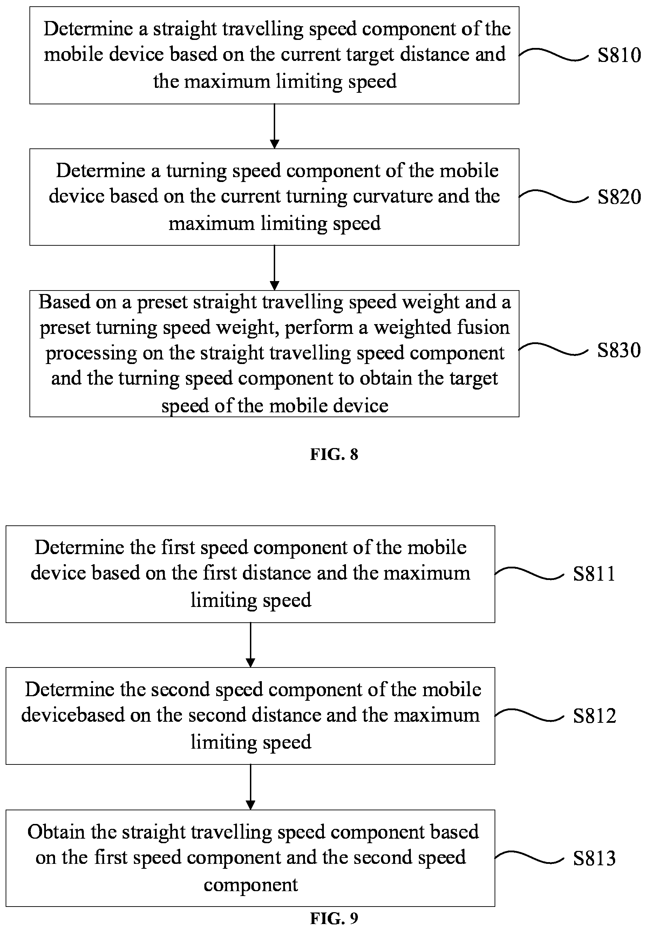

As shown in FIG. 8, in the speed control method in an example of the present disclosure, determining the target speed of the mobile device based on the current target distance, the current turning curvature, and the maximum limiting speed includes steps S810 to S830.

In S810, a straight-line travelling speed component of the mobile device is determined based on the current target distance and the maximum limiting speed.

In the embodiment of the present disclosure, after obtaining the current target distance between the mobile device and the obstacle, the maximum limiting speed can be adaptively adjusted based on the size of the current target distance to obtain the straight-line travelling speed component.

Specifically, the current target distance is positively correlated with the straight-line travelling speed component. That is, the greater the current target distance, it means that the farther the mobile device is currently from the obstacle, the lower the risk of an accident, and thus the greater the straight-line travelling speed component. On the contrary, the smaller the current target distance, it means that the closer the mobile device is currently from the obstacle, the higher the risk of an accident, and thus the smaller the straight-line travelling speed component.

Based on the above principle, those skilled in the art can undoubtedly achieve the calculation of the straight-line travelling speed component, and the calculation method is not limited in the present disclosure. For example, in some embodiments, a corresponding relationship between the current target distance and the straight-line travelling speed component can be established in advance, and the size of the straight-line travelling speed component can be determined by looking up the corresponding relationship.

In some embodiments of the present disclosure, as described in FIG. 5 above, the current target distance includes the first distance $L_1$ and the second distance $L_2$. Therefore, the straight-line travelling speed component in an embodiment of the present disclosure also includes a first speed component and a second speed component, which will be described with reference to the embodiment in FIG. 9.

As shown in FIG. 9, in the speed control method in an example of the present disclosure, determining the straight-line travelling speed component of the mobile device based on the current target distance and the maximum limiting speed includes steps S811 to S813.

In S811, the first speed component of the mobile device is determined based on the first distance and the maximum limiting speed.

In S812, the second speed component of the mobile device is determined based on the second distance and the maximum limiting speed.

In S813, the straight-line travelling speed component is obtained based on the first speed component and the second speed component.

As shown in FIG. 4, the first distance $L_1$ between the mobile device 600 and the obstacle $O_2$, and the second distance $L_2$ between the mobile device 600 and the obstacle $O_2$, can be obtained through the aforementioned implementation manner. Thus, the first speed component and the second speed component can be expressed as:

$$V_1 = \frac{L_1}{R} * V_{max} \qquad (1)$$

$$V_2 = \frac{L_2}{P} * V_{max} \qquad (2)$$

In the above formulas (1) and (2), $V_1$ represents the first speed component, $V_2$ represents the second speed component, $L_1$ represents the first distance, $L_2$ represents the second distance, $R$ represents half the width of the preset range, $P$ represents the length of the preset range, and $V_{max}$ represents the maximum limiting speed of the mobile device.

As shown in FIG. 4, when there is no obstacle within the preset range, the first distance $L_1 = R$ and the second distance $L_2 = P$ can be set, in this case, the first speed component $V_1 = V_{max}$, and the second speed component $V_2 = V_{max}$.

Based on the above formulas (1) and (2), the first speed component $V_1$ and the second speed component $V_2$ of

the mobile device can be calculated, and then the first speed component $V_1$ and the second speed component $V_2$ are determined as the straight-line travelling speed component.

In S820, a turning speed component of the mobile device is determined based on the current turning curvature and the maximum limiting speed.

In the embodiment of the present disclosure, after obtaining the turning curvature of the current target path of the mobile device, the maximum limiting speed can be adaptively adjusted based on the size of the turning curvature to obtain the turning speed component.

Specifically, the turning curvature is negatively correlated with the turning speed component. That is, the larger the current turning curvature, it means that the higher the risk that the mobile device will have an accident, so the turning speed component should be smaller. On the contrary, the smaller the current turning curvature, it means that the lower the risk that the mobile device will have an accident, and the greater the turning speed component.

Based on the above principle, in some embodiments, the calculation process of the turning speed component can be expressed as:

$$V_3 = \left(1 - \frac{2\theta}{\pi}\right) * V_{max} \qquad (3)$$

In the above formula (3), $V_3$ represents the turning speed component, $\theta$ represents the current turning curvature, and $V_{max}$ represents the maximum limiting speed.

As shown in FIG. 7, when there is no intersection between the first reference line segment $K_1$ and the second reference line segment $K_2$, the current turning curvature $\theta$ can be set to zero, thus it can be seen from formula (3) that the turning speed component $V_3$ at this time, $V_3 = V_{max}$.

In S830, based on a preset straight-line travelling speed weight and a preset turning speed weight, a weighted fusion processing is performed on the straight-line travelling speed component and the turning speed component to obtain the target speed of the mobile device.

It can be understood that the straight-line travelling speed component represents a straight-line travelling speed of the mobile device under the current road condition, and the turning speed component represents a turning speed of the mobile device under the current road condition. In the embodiment of the present disclosure, it is necessary to consider both the risk of a collision between the mobile device and the obstacle in the case of travelling straight, and the risk of an accident in the case of turning. Therefore, the weighted fusion processing can be performed on the straight-line travelling speed component and the turning speed component to obtain the final target speed.

In some embodiments, the straight-line travelling speed weight includes a first weight value a and a second weight value b, and the turning speed weight includes a third weight value c. Therefore, the target speed can be represented as:

$$V = a * V_1 + b * V_2 + c * V_3 \qquad (4)$$

In the above formula (4), $V$ represents the target speed, $V_1$ represents the first speed component, a represents the first weight value of the first speed component, $V_2$ represents the second speed component, b represents the second weight value of the second speed component, $V_3$ represents the turning speed component, and c represents the third weight value of the turning speed component, where a+b+c=1.

Specific values of the first weight value a, the second weight value b, and the third weight value c can set by those skilled in the art according to requirements of specific scenarios, and are not limited in the present disclosure.

Through the above formula (4), the fusion processing can be performed on the first speed component, second speed component, and turning speed component to obtain the target speed corresponding to the mobile device.

Combining with the formulas (1) to (4), the control principle of the method in the embodiment of the present disclosure is explained in the following scenarios.

When the mobile device moves in a straight line or has a small turning curvature, and there is no obstacle within the preset range in front of the mobile device, the first speed component $V_1$, the second speed component $V_2$ and the turning speed component $V_3$ can be calculated based on the aforementioned formulas (1) to (3), i.e., $V_1 = V_{max}$, $V_2 = V_{max}$, and $V_3 = V_{max}$. By substituting into the formula (4), the target speed $V = V_{max}$ can be obtained, which means that the mobile device maintains operation at the maximum limiting speed.

When the mobile device moves in a straight line or has a small turning curvature, and there is an obstacle within the preset range in front of the mobile device, the turning speed component $V_3$ can be calculated based on the aforementioned formula (3), $V_3 = V_{max}$. The first speed component $V_1$ and the second speed component $V_2$ are both less than $V_{max}$. The target speed $V$ obtained by substituting into the formula (4) should also be less than $V_{max}$, which means that the speed of the mobile device should be reduced adaptively.

When the mobile device moves along a curve and there is no obstacle within the preset range in front of the mobile device, the first speed component $V_1$ and the second speed component $V_2$ can be calculated based on the aforementioned formulas (1) and (2), i.e., $V_1 = V_{max}$, $V_2 = V_{max}$, the turning speed component $V_3$ calculated based on the formula (3) is smaller than $V_{max}$. The target speed $V$ obtained by substituting into the formula (4) should also be smaller than $V_{max}$, which means that the speed of the mobile device should be reduced adaptively.

When the mobile device moves along a curve and there is an obstacle within the preset range in front of the mobile device, the first speed component $V_1$, the second speed component $V_2$, and the turning speed component $V_3$ calculated based on the aforementioned formulas (1) to (3) are smaller than $V_{max}$. The target speed $V$ obtained by substituting into the formula (4) should also be smaller than $V_{max}$, which means that the speed of the mobile device should be reduced adaptively.

Based on the above scenarios, it can be seen that in the embodiment of the present disclosure, the speed of the mobile device is not only adjusted based on the distance between the mobile device and the obstacle, but also adjusted in combination with the turning curvature. During the turning process, even if there is no obstacle in front of the mobile device, the speed of the mobile device will still be reduced, so as to avoid overturning caused by turning too fast, or reduce the risk of an accident caused by a blind area of vision at turns.

In some embodiments, to ensure the normal operation of the mobile device, a preset speed range of the mobile device can be set in advance, which can limit a minimum speed limit $V_{min}$ and a maximum limiting speed $V_{max}$ of the mobile device, that is, the moving speed of the mobile device should be within a preset speed range $[V_{min}, V_{max}]$.

When the target speed obtained through the aforementioned method is less than the minimum speed limit $V_{min}$, the mobile device can be controlled to move at the minimum speed limit $V_{min}$. When the target speed is greater than the maximum limiting speed $V_{max}$, the mobile device can be controlled to move at the maximum limiting speed $V_{max}$. When the target speed is within the preset speed range $[V_{min}, V_{max}]$, the mobile device can be controlled to move at the target speed.

The specific value of the preset speed range $[V_{min}, V_{max}]$ can be set by those skilled in the art according to specific application scenarios, and are not limited in the present disclosure.

From the above description, it can be seen that in the embodiment of the present disclosure, the current moving speed is controlled by the current target distance between the mobile device and the obstacle, and the current turning curvature, so that the moving speed can be adaptively adjusted according to the current road condition, and the risk of an accident can be reduced. Moreover, in speed control, not only the target distance between the mobile device and the obstacle, but also the bending degree of the target path of the mobile device itself is considered, so as to avoid overturning caused by too fast turning speed, reduce the risk of an accident caused by a blind area of vision at turns, and further improve the speed control effect.

In a second aspect, an embodiment of the present disclosure provides a speed control apparatus, which can be applied to a mobile device. The mobile device in the embodiment of the present disclosure can be any type of device with autonomous motion capability suitable for implementation, such as a sweeping robot, a logistics robot, a food delivery robot, an intelligent mobile trash can, which in not limited in the present disclosure.

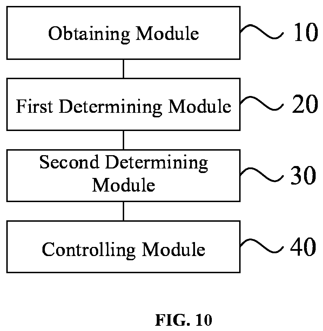

As shown in FIG. 10, the speed control apparatus in an example of the present disclosure includes:

> an obtaining module 10, configured to obtain a cost map of a moving area and a target path of the mobile device moving in the moving area;
> a first determining module 20, configured to determine, based on the cost map, a current target distance between the mobile device and an obstacle, and a current turning curvature of the mobile device when moving along the target path;
> a second determining module 30, configured to determine a target speed of the mobile device based on the current target distance, the current turning curvature, and a maximum limiting speed of the mobile device; and
> a controlling module 40, configured to control the mobile device to move at the target speed.

From the above description, it can be seen that in the embodiment of the present disclosure, the current moving speed is controlled by the current target distance between the mobile device and the obstacle, and the current turning curvature, so that the moving speed can be adaptively adjusted according to the current road condition, and the risk of an accident can be reduced. Moreover, in speed control, not only the target distance between the mobile device and the obstacle, but also the bending degree of the target path of the mobile device itself is considered, so as to reduce the risk of an accident caused by a blind area of vision at turns, and further improve the speed control effect.

In some embodiments, the obtaining module 10 is configured to:

> obtain scene data of the moving area collected through one or more sensors of the mobile device;
> perform localization on the mobile device and mapping based on the scene data to obtain a current position of the mobile device and an environment map; and
> obtain the cost map of the moving area based on obstacle information in the environment map, and determine the target path of the mobile device based on the cost map and the current position.

In some embodiments, the first determining module 20 is configured to:

based on the cost map, determine obstacle data within a preset range in front of the mobile device;
based on the obstacle data, determine a first distance between the obstacle and the target path, and a second distance between the obstacle and a current position of the mobile device; where the first distance is perpendicular to the target path, and the second distance is parallel to the target path; and
obtain the current target distance based on the first distance and the second distance.

In some embodiments, the first determining module 20 is configured to:

based on the cost map, determine a first reference line segment and a second reference line segment within a preset range in front of the mobile device; where the first reference line segment and the second reference line segment are both perpendicular to the target path, and a preset distance is spaced between the first reference line segment and the second reference line segment; and
determine the current turning curvature of the mobile device based on an angle between the first reference line segment and the second reference line segment.

In some embodiments, the first determining module 20 is configured to:

in response to the first reference line segment intersecting with the second reference line segment, determine intersection coordinates of the first reference line segment and the second reference line segment based on the cost map, determine the angle between the first reference line segment and the second reference line segment based on the intersection coordinates and the preset distance, and determine the angle as the current turning curvature; or
in response to the first reference line segment not intersecting with the second reference line segment, determine that the current turning curvature is zero.

In some embodiments, the second determining module 30 is configured to:

determine a straight-line travelling speed component of the mobile device based on the current target distance and the maximum limiting speed; where the straight-line travelling speed component is positively correlated with the current target distance;
determine a turning speed component of the mobile device based on the current turning curvature and the maximum limiting speed; where the turning speed component is negatively correlated with the current turning curvature; and
based on a preset straight-line travelling speed weight and a preset turning speed weight, perform a weighted fusion processing on the straight-line travelling speed component and the turning speed component to obtain the target speed of the mobile device.

In some embodiments, the second determining module 30 is configured to:

determine a first speed component of the mobile device based on the first distance and the maximum limiting speed;
determine a second speed component of the mobile device based on the second distance and the maximum limiting speed; and
obtain the straight-line travelling speed component based on the first speed component and the second speed component.

In some embodiments, the controlling module 40 is configured to:
control the mobile device to move at the target speed in response to the target speed satisfying a preset speed range.
From the above description, it can be seen that in the embodiment of the present disclosure, the current moving speed is controlled by the current target distance between the mobile device and the obstacle, and the current turning curvature, so that the moving speed can be adaptively adjusted according to the current road condition, and the risk of an accident can be reduced. Moreover, in speed control, not only the target distance between the mobile device and the obstacle, but also the bending degree of the target path of the mobile device itself is considered, so as to avoid overturning caused by too fast turning speed, reduce the risk of an accident caused by a blind area of vision at turns, and further improve the speed control effect.
In a third aspect, an embodiment of the present disclosure provides a mobile device, including:

a processor; and

a memory storing computer instructions for causing the processor to perform the method according to any embodiment in the first aspect.

In a fourth aspect, an embodiment of the present disclosure provides a storage medium, which stores computer instructions for causing a computer to perform the method according to any embodiment in the first aspect.

From the above description, it can be seen that in the embodiment of the present disclosure, the current moving speed is controlled by the current target distance between the mobile device and the obstacle, and the current turning curvature, so that the moving speed can be adaptively adjusted according to the current road condition, and the risk of an accident can be reduced. Moreover, in speed control, not only the target distance between the mobile device and the obstacle, but also the bending degree of the target path of the mobile device itself is considered, so as to avoid overturning caused by too fast turning speed, reduce the risk of an accident caused by a blind area of vision at turns, and further improve the speed control effect.

**Claims**

1.  A speed control method, performed by a mobile device, the method comprising:

    obtaining (S210) a cost map of a moving area and a target path of the mobile device moving in the moving area;
    based on the cost map, determining (S220) a current target distance between the mobile device and an obstacle, and a current turning curvature of the mobile device when moving along the target path;
    determining (S230) a target speed of the mobile device based on the current target distance, the current turning curvature, and a maximum limiting speed of the mobile device; and
    controlling (S240) the mobile device to move at the target speed;
    **characterized in that**
    determining (S230) the target speed of the mobile device based on the current target distance, the current turning curvature, and the maximum limiting speed of the mobile device comprises:

    determining (S810) a straight-line travelling speed component of the mobile device based on the current target distance and the maximum limiting speed; wherein the straight-line travelling speed component is positively correlated with the current target distance;
    determining (S820) a turning speed component of the mobile device based on the current turning curvature and the maximum limiting speed; wherein the turning speed component is negatively correlated with the current turning curvature; and
    based on a preset straight-line travelling speed weight and a preset turning speed weight, performing (S830) a weighted fusion processing on the straight-line travelling speed component and the turning speed component to obtain the target speed of the mobile device;
    wherein the current target distance comprises a first distance perpendicular to the target path and a second distance from the obstacle to a horizontal line where a current position of the mobile device is located, and determining (S810) the straight-line travelling speed component of the mobile device based on the current target distance and the maximum limiting speed comprises:

    determining (S811) a first speed component of the mobile device based on the first distance and the maximum limiting speed;
    determining (S812) a second speed component of the mobile device based on the second distance and the maximum limiting speed; and
    obtaining (S813) the straight-line travelling speed component based on the first speed component and the second speed component.

2.  The method according to claim 1, wherein obtaining (S210) the cost map of the moving area and the target path of the mobile device moving in the moving area comprises:

    obtaining (S310) scene data of the moving area collected through one or more sensors of the mobile device;
    performing (S320) localization on the mobile device and mapping based on the scene data to obtain the current position of the mobile device and an environment map; and
    obtaining (S330) the cost map of the moving area based on obstacle information in the environment map, and determining the target path of the mobile device based on the cost map and the current position.

3. The method according to claim 1, wherein based on the cost map, determining (S220) the current target distance between the mobile device and the obstacle comprises:

based on the cost map, determining (S510) obstacle data within a preset range in front of the mobile device;
based on the obstacle data, determining (S520) the first distance between the obstacle and the target path, and the second distance between the obstacle and the current position of the mobile device; and
obtaining (S530) the current target distance based on the first distance and the second distance.

4. The method according to claim 1, wherein based on the cost map, determining (S220) the current turning curvature of the mobile device when moving along the target path comprises:

based on the cost map, determining (S610) a first reference line segment and a second reference line segment within a preset range in front of the mobile device; wherein the first reference line segment and the second reference line segment are both perpendicular to the target path, and a preset distance is spaced between the first reference line segment and the second reference line segment; and
determining (S620) the current turning curvature of the mobile device based on an angle between the first reference line segment and the second reference line segment.

5. The method according to claim 4, wherein determining (S620) the current turning curvature of the mobile device based on the angle between the first reference line segment and the second reference line segment comprises:

in response to the first reference line segment intersecting with the second reference line segment, determining intersection coordinates of the first reference line segment and the second reference line segment based on the cost map, determining the angle between the first reference line segment and the second reference line segment based on the intersection coordinates and the preset distance, and determining the angle as the current turning curvature; or
in response to the first reference line segment not intersecting with the second reference line segment, determining that the current turning curvature is zero.

6. The method according to claim 1, wherein controlling the mobile device to move at the target speed comprises:
controlling the mobile device to move at the target speed in response to the target speed satisfying a preset speed range.

7. A mobile device (600), comprising:

a processor (601); and
a memory (602) storing computer instructions for causing the processor (601) to perform the method according to any one of claims 1 to 6.

8. A storage medium storing computer instructions for causing a computer to perform the method according to any one of claims 1 to 6.

**Patentansprüche**

1. Geschwindigkeitssteuerungsverfahren, durchgeführt von einer mobilen Vorrichtung, wobei das Verfahren die folgenden Schritte aufweist:

Erfassen (S210) einer Cost Map eines Bewegungsbereichs und eines Bewegungswegs der sich in dem Bewegungsbereich bewegenden mobilen Vorrichtung;
basierend auf der Cost Map, Bestimmen (S220) einer gegenwärtigen Ziel-Entfernung zwischen der mobilen Vorrichtung und einem Hindernis, und einer gegenwärtigen Kurvenkrümmung der mobilen Vorrichtung während der Bewegung entlang des Ziel-Wegs;
Bestimmen (S230) einer Ziel-Geschwindigkeit der mobilen Vorrichtung basierend auf der gegenwärtigen Ziel-Entfernung, der gegenwärtigen Kurvenkrümmung, und einer maximalen Grenzgeschwindigkeit der mobilen Vorrichtung; und
Steuern (S240) der mobilen Vorrichtung zur Bewegung mit der Ziel-Geschwindigkeit;
**dadurch gekennzeichnet, dass**

das Bestimmen (S230) einer Ziel-Geschwindigkeit der mobilen Vorrichtung basierend auf der gegenwärtigen Ziel-Entfernung, der gegenwärtigen Kurvenkrümmung, und einer maximalen Grenzgeschwindigkeit der mobilen Vorrichtung die folgenden Schritte aufweist:

Bestimmen (S810) einer Geraden-Bewegungsgeschwindigkeitskomponente der mobilen Vorrichtung basierend auf der gegenwärtigen Ziel-Entfernung und der maximalen Grenzgeschwindigkeit, wobei die Geraden-Bewegungsgeschwindigkeitskomponente positiv mit der gegenwärtigen Ziel-Entfernung korreliert ist;

Bestimmen (S820) einer Kurvengeschwindigkeitskomponente der mobilen Vorrichtung basierend auf der aktuellen Kurvenkrümmung und der maximalen Grenzgeschwindigkeit, wobei die Kurvengeschwindigkeitskomponente negativ mit der aktuellen Kurvenkrümmung negativ korreliert ist; und

basierend auf einem voreingestellten Geraden-Bewegungsgeschwindigkeitsgewicht und einem voreingestellten Kurvengeschwindigkeitsgewicht, Durchführen (S830) einer gewichteten Fusionsverarbeitung der Geraden-Bewegungsgeschwindigkeitskomponente und der Kurvengeschwindigkeitskomponente, um die Ziel-Geschwindigkeit der mobilen Vorrichtung zu erreichen;

wobei die gegenwärtige Ziel-Entfernung eine erste Entfernung senkrecht zu dem Ziel-Weg und eine zweite Entfernung von dem Hindernis zu einer horizontalen Linie aufweist, auf welcher sich eine gegenwärtige Position der mobilen Vorrichtung befindet, und das Bestimmen (S810) einer Geraden-Bewegungsgeschwindigkeitskomponente der mobilen Vorrichtung basierend auf der gegenwärtigen Ziel-Entfernung und der maximalen Grenzgeschwindigkeit die folgenden Schritte aufweist:

Bestimmen (S811) einer ersten Geschwindigkeitskomponente der mobilen Vorrichtung basierend auf der ersten Entfernung und der maximalen Grenzgeschwindigkeit;

Bestimmen (S812) einer zweiten Geschwindigkeitskomponente der mobilen Vorrichtung basierend auf der zweiten Entfernung und der maximalen Grenzgeschwindigkeit; und

Ermitteln (S813) der Geraden-Bewegungsgeschwindigkeitskomponente basierend auf der ersten Geschwindigkeitskomponente und der zweiten Geschwindigkeitskomponente.

2. Verfahren nach Anspruch 1, bei welchem das Erfassen (S210) der Cost Map des Bewegungsbereichs und des Bewegungswegs der sich in dem Bewegungsbereich bewegenden mobilen Vorrichtung die folgenden Schritte aufweist:

Erfassen (S310) von durch einen oder mehrere Sensoren der mobilen Vorrichtung aufgenommenen Szenendaten des Bewegungsbereichs;

Durchführen (S320) einer Positionsbestimmung der mobilen Vorrichtung und eines Mappings basierend auf den Szenendaten, um die gegenwärtige Position der mobilen Vorrichtung und eine Umgebungskarte zu erhalten; und

Erfassen (S130) der Cost Map des Bewegungsbereichs basierend auf Hindernisinformationen in der Umgebungskarte, und Bestimmen des Ziel-Wegs der mobilen Vorrichtung basierend auf der Cost Map und der gegenwärtigen Position.

3. Verfahren nach Anspruch 1, bei welchem basierend auf der Cost Map, das Bestimmen (S220) der gegenwärtigen Ziel-Entfernung zwischen der mobilen Vorrichtung und dem Hindernis die folgenden Schritte aufweist:

basierend auf der Cost Map, Bestimmen (S510) von Hindernisdaten innerhalb eines vorbestimmten Bereichs vor der mobilen Vorrichtung;

basierend auf den Hindernisdaten, Bestimmen (S520) der ersten Entfernung zwischen dem Hindernis und dem Ziel-Weg, und der zweiten Entfernung zwischen dem Hindernis und der gegenwärtigen Position der mobilen Vorrichtung; und

Erfassen (S530) der gegenwärtigen Ziel-Entfernung basierend auf der ersten Entfernung und der zweiten Entfernung.

4. Verfahren nach Anspruch 1, bei welchem basierend auf der Cost Map, das Bestimmen (S220) der gegenwärtigen Kurvenkrümmung der mobilen Vorrichtung während der Bewegung entlang des Ziel-Wegs sie folgenden Schritte aufweist:

basierend auf der Cost Map, Bestimmen (S610) eines Referenzliniensegments und eines zweiten Referenzliniensegments innerhalb eines voreingestellten Bereichs vor der mobilen Vorrichtung, wobei das erste Referenzliniensegment und das zweite Referenzliniensegment beide senkrecht zu dem Ziel-Weg sind, und eine voreingestellte Entfernung zwischen dem ersten Referenzliniensegment und dem zweiten Referenzliniensegment liegt; und
Bestimmen (S620) der gegenwärtigen Kurvenkrümmung der mobilen Vorrichtung basierend auf einem Winkel zwischen dem ersten Referenzliniensegment und dem zweiten Referenzliniensegment.

5.  Verfahren nach Anspruch 4, bei welchem das Bestimmen (S620) der gegenwärtigen Kurvenkrümmung der mobilen Vorrichtung basierend auf einem Winkel zwischen dem ersten Referenzliniensegment und dem zweiten Referenzliniensegment die folgenden Schritte aufweist:

in Reaktion darauf, dass das erste Referenzliniensegment das zweite Referenzliniensegment kreuzt, Bestimmen von Kreuzungskoordinaten des ersten Referenzliniensegments und des zweiten Referenzliniensegments basierend auf der Cost Map, Bestimmen des Winkels zwischen dem ersten Referenzliniensegment und dem zweiten Referenzliniensegment basierend auf den Kreuzungskoordinaten und der voreingestellten Entfernung, und Bestimmen des Winkels als die gegenwärtige Kurvenkrümmung; oder
in Reaktion darauf, dass das erste Referenzliniensegment das zweite Referenzliniensegment nicht kreuzt, Feststellen, dass die gegenwärtige Kurvenkrümmung null ist.

6.  Verfahren nach Anspruch 1, bei welchem das Steuern der mobilen Vorrichtung zum Bewegen mit der Ziel-Geschwindigkeit den folgenden Schritt aufweist:
Steuern der mobilen Vorrichtung zur Bewegung mit der Ziel-Geschwindigkeit in Reaktion darauf, dass die Ziel-Geschwindigkeit einen voreingestellten Geschwindigkeitsbereich erfüllt.

7.  Mobile Vorrichtung (600) mit:

einem Prozessor (601); und
einem Speicher (602), der Computerbefehle speichert, um den Prozessor (601) zu veranlassen, um das Verfahren nach einem der Ansprüche 1 bis 6 durchzuführen.

8.  Speichermedium, welches Computerbefehle speichert, um einen Prozessor zu veranlassen, um das Verfahren nach einem der Ansprüche 1 bis 6 durchzuführen.


**Revendications**

1.  Procédé de commande de vitesse, mis en œuvre par un dispositif mobile, le procédé comprenant les étapes consistant à :

obtenir (S210) une carte de coût d'une zone de déplacement et d'un trajet cible du dispositif mobile se déplaçant dans la zone de déplacement ;
sur la base de la carte de coût, déterminer (S220) une distance cible courante entre le dispositif mobile et un obstacle, et une courbure de virage courante du dispositif mobile lors d'un déplacement le long du trajet cible ;
déterminer (S230) une vitesse cible du dispositif mobile sur la base de la distance cible courante, de la courbure de virage courante et d'une vitesse de limitation maximale du dispositif mobile ; et
commander (S240) le dispositif mobile pour qu'il se déplace à la vitesse cible ;
**caractérisé en ce que**
l'étape de détermination (S230) de la vitesse cible du dispositif mobile sur la base de la distance cible courante, de la courbure de virage courante et de la vitesse de limitation maximale du dispositif mobile consiste à :

déterminer (S810) une composante de vitesse de déplacement en ligne droite du dispositif mobile sur la base de la distance cible courante et de la vitesse de limitation maximale ; dans lequel la composante de vitesse de déplacement en ligne droite est en corrélation positive avec la distance cible courante ;
déterminer (S820) une composante de vitesse de virage du dispositif mobile sur la base de la courbure de virage courante et de la vitesse de limitation maximale ; dans lequel la composante de vitesse de virage est en corrélation négative avec la courbure de virage courante ; et
sur la base d'un poids de vitesse de déplacement en ligne droite prédéfini et d'un poids de vitesse de virage prédéfini, appliquer (S830) un traitement de fusion pondérée à la composante de vitesse de déplacement en ligne droite et à la composante de vitesse de virage pour obtenir la vitesse cible du dispositif mobile ;
dans lequel la distance cible courante comprend une première distance perpendiculaire au trajet cible et une seconde distance de l'obstacle à une ligne horizontale au niveau de laquelle est située une position courante du dispositif mobile, et l'étape de détermination (S810) de la composante de vitesse de déplacement en ligne droite du dispositif mobile sur la base de la distance cible courante et de la vitesse de limitation maximale consiste à :

déterminer (S811) une première composante de vitesse du dispositif mobile sur la base de la première distance et de la vitesse de limitation maximale ;
déterminer (S812) une seconde composante de vitesse du dispositif mobile sur la base de la seconde distance et de la vitesse de limitation maximale ; et
obtenir (S813) la composante de vitesse de déplacement en ligne droite sur la base de la première composante de vitesse et de la seconde composante de vitesse.

2. Procédé selon la revendication 1, dans lequel l'étape d'obtention (S210) de la carte de coût de la zone de déplacement et du trajet cible du dispositif mobile se déplaçant dans la zone de déplacement consiste à :

obtenir (S310) des données de scènes de la zone de déplacement collectées par l'intermédiaire d'au moins un capteur du dispositif mobile ;
exécuter (S320) une localisation du dispositif mobile et un mappage sur la base des données de scène pour obtenir une position courante du dispositif mobile et une carte d'environnement ; et
obtenir (S330) la carte de coût de la zone de déplacement sur la base d'informations d'obstacle dans la carte d'environnement, et déterminer le trajet cible du dispositif mobile sur la base de la carte de coût et de la position courante.

3. Procédé selon la revendication 1, dans lequel, sur la base de la carte de coût, l'étape de détermination (S220) de la distance cible courante entre le dispositif mobile et l'obstacle consiste à :

sur la base de la carte de coût, déterminer (S510) des données d'obstacle sur une distance prédéfinie à l'avant du dispositif mobile ;
sur la base des données d'obstacle, déterminer (S520) la première distance entre l'obstacle et le trajet cible, et la seconde distance entre l'obstacle et la position courante du dispositif mobile ; et
obtenir (S530) la distance cible courante sur la base de la première distance et de la seconde distance.

4. Procédé selon la revendication 1, dans lequel, sur la base de la carte de coût, l'étape de détermination (S220) de la courbure de virage courante du dispositif mobile lors d'un déplacement le long du trajet cible consiste à :

sur la base de la carte de coût, déterminer (S610) un premier segment de ligne de référence et un second segment de ligne de référence sur une distance prédéfinie à l'avant du dispositif mobile ; dans lequel le premier segment de ligne de référence et le second segment de ligne de référence sont tous les deux perpendiculaires au trajet cible, et une distance prédéfinie sépare le premier segment de ligne de référence et le second segment de ligne de référence ; et
déterminer (S620) la courbure de virage courante du dispositif mobile sur la base d'un angle entre le premier segment de ligne de référence et le second segment de ligne de référence.

5. Procédé selon la revendication 4, dans lequel l'étape de détermination (S620) de la courbure de virage courante du dispositif mobile sur la base de l'angle entre le premier segment de ligne de référence et le second segment de ligne de référence consiste à :

en réponse à une intersection entre le premier segment de ligne de référence et le second segment de ligne de référence, déterminer des coordonnées d'intersection du premier segment de ligne de référence et du second segment de ligne de référence sur la base de la carte de coût, déterminer l'angle entre le premier segment de ligne de référence et le second segment de ligne de référence sur la base des coordonnées d'intersection et de la distance prédéfinie, et déterminer l'angle en tant que la courbure de virage courante ; ou
en réponse à une absence d'intersection entre le premier segment de ligne de référence et le second segment de ligne de référence, déterminer que la courbure de virage courante est nulle.

6. Procédé selon la revendication 1, dans lequel l'étape de commande du dispositif mobile pour qu'il se déplace à la vitesse cible consiste à :
commander le dispositif mobile pour qu'il se déplace à la vitesse cible en réponse à la satisfaction d'une plage de vitesse prédéfinie par la vitesse cible.

7. Dispositif mobile (600), comprenant :

un processeur (601) ; et
une mémoire (602) maintenant des instructions d'ordinateur destinées à amener le processeur (601) à mettre en œuvre le procédé selon l'une quelconque des revendications 1 à 6.

8. Support d'informations maintenant des instructions d'ordinateur destinées à amener un ordinateur à mettre en œuvre le procédé selon l'une quelconque des revendications 1 à 6.

600

| Processor | ⌒ 601 | | Memory | ⌒ 602 |

⌒ 603

| Scene Perception System | | Driving Device |

604

605

**FIG. 1**

| Obtain a cost map of a moving area and a target path of the mobile device moving in the moving area | S210 |

| Based on the cost map, determine a current target distance between the mobile device and an obstacle and a current turning curvature of the mobile device when moving along the target path | S220 |

| Determine a target speed of the mobile device based on the current target distance, the current turning curvature, and a maximum limiting speed of the mobile device | S230 |

| Control the mobile device to move at the target speed | S240 |

**FIG. 2**

Obtain scene data of the moving area collected through one or more sensors of the mobile device — S310

Perform localization on the mobile device and mapping based on the scene data to obtain the current position of the mobile device and an environment map — S320

Obtain the cost map of the moving area based on obstacle information in the environment map, and determine the target path of the mobile device based on the cost map and the current position — S330

**FIG. 3**

**FIG. 4**

Based on the cost map, determine obstacle data within a preset range in front of the mobile device — S510

Based on the obstacle data, determine a first distance between the obstacle and the target path, and a second distance between the obstacle and the current position of the mobile device — S520

Obtain the current target distance based on the first distance and the second distance — S530

**FIG. 5**

Based on the cost map, determine a first reference line segment and a second reference line segment within a preset range in front of the mobile device — S610

Determine the current turning curvature of the mobile device based on an angle between the first reference line segment and the second reference line segment — S620

**FIG. 6**

EP 4 318 162 B1

**FIG. 7**

25

Determine a straight travelling speed component of the mobile device based on the current target distance and the maximum limiting speed ⌒〜 S810

Determine a turning speed component of the mobile device based on the current turning curvature and the maximum limiting speed ⌒〜 S820

Based on a preset straight travelling speed weight and a preset turning speed weight, perform a weighted fusion processing on the straight travelling speed component and the turning speed component to obtain the target speed of the mobile device ⌒〜 S830

**FIG. 8**

Determine the first speed component of the mobile device based on the first distance and the maximum limiting speed ⌒〜 S811

Determine the second speed component of the mobile devicebased on the second distance and the maximum limiting speed ⌒〜 S812

Obtain the straight travelling speed component based on the first speed component and the second speed component ⌒〜 S813

**FIG. 9**

Obtaining Module ~ 10

First Determining Module ~ 20

Second Determining Module ~ 30

Controlling Module ~ 40

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3684664 B1

- EP 0778507 B1

**Non-patent literature cited in the description**

- THE DYNAMIC WINDOW APPROACH TO COLLISION AVOIDANCE. **FOX D et al.** IEEE ROBOTICS & AUTOMATION MAGAZINE. IEEE SERVICE CENTER, 01 March 1997, vol. 4, 23-33